# EUROPÄISCHE PATENTSCHRIFT

(11) **EP 0 877 932 B1**
(45) Veröffentlichungstag und Bekanntmachung des Hinweises auf die Patenterteilung: **06.02.2008**
(21) Anmeldenummer: 97948700.6
(22) Anmeldetag: 03.11.1997
(51) Int. Cl.: G01N 27/407

(54) **ELEKTROCHEMISCHER MESSFÜHLER**
ELECTROCHEMICAL SENSOR
CAPTEUR ELECTROCHIMIQUE

(30) Priorität: 06.11.1996 DE 19645684; 23.10.1997 DE 19746743
(43) Veröffentlichungstag der Anmeldung: 18.11.1998
(73) Patentinhaber: ROBERT BOSCH GMBH, 70442 Stuttgart (DE)
(72) Erfinder: JACH, Olaf, D-71034 Böblingen (DE); DIEHL, Lothar, D-70499 Stuttgart (DE)
(86) Internationale Anmeldenummer: PCT/DE1997/002538
(87) Internationale Veröffentlichungsnummer: WO 1998/020334

(56) Entgegenhaltungen:
- US-A- 4 851 103
- US-A- 5 098 549
- US-A- 5 137 615
- US-A- 5 419 828
- US-A- 5 507 937
- US-A- 5 522 979

## Beschreibung

Die Erfindung betrifft ein Verfahren zum Herstellen eines elektrochemischen Meßfühlers mit den im Oberbegriff des Anspruchs 1 genannten Merkmalen.

### Stand der Technik

Elektrochemische Meßfühler der gattungsgemäßen Art sind bekannt. Diese elektrochemischen Meßfühler umfassen ein elektrochemisches Element, welches eine elektrochemische Pumpzelle mit einem vorzugsweise planaren ersten Festelektrolytkörper und einer ersten und zweiten vorzugsweise porösen Elektrode aufweist. Diese Meßfühler umfassen weiterhin eine mit der Pumpzelle verbundene elektrochemische Sensorzelle mit einem vorzugsweise planaren zweiten Festelektrolytkörper und einer dritten und vierten vorzugsweise porösen Elektrode sowie eine über eine Gaszutrittsöffnung und einen Gaszutrittskanal mit dem Meßgasraum verbundene von den beiden Festelektrolytkörpern umschlossene, das heißt in einer inneren Aushöhlung befindliche Diffusionswiderstandseinrichtung. Die Diffusionswiderstandseinrichtung kann eine poröse Füllung enthalten. Das Meßgas gelangt über die Gaszutrittsöffnung und den Gaszutrittskanal in die innere Aushöhlung, wobei die erste und zweite Elektrode der Pumpzelle regulierend auf den Zutritt des Meßgases in die Aushöhlung wirken und somit einen kontrollierten Partialdruck der zu messenden Gaskomponente bereitstellen. Die Spannungsversorgung der elektrochemischen Pumpzelle übernimmt eine außerhalb des elektrochemischen Elements angebrachte Einrichtung.

Aufgrund der unterschiedlichen Gaspartialdrücke in der Diffusionswiderstandseinrichtung sowie einem beispielsweise im zweiten Festelektrolytkörper angeordneten Referenzgasraum stellt sich ein elektrochemischer Potentialunterschied zwischen den Elektroden des zweiten Festelektrolytkörpers ein, der durch eine außerhalb des elektrochemischen Elements liegende Spannungsmeßeinrichtung erfaßt wird.

Bekannt ist es auch, den elektrochemischen Meßfühler mit einer elektrischen Heizung zu versehen, die sowohl die elektrochemische Pumpzelle als auch die elektrochemische Sensorzelle heizt, um eine geeignete Arbeitstemperatur des elektrochemischen Meßfühlers sicherzustellen.

Bei dem im Stand der Technik bekannten Aufbau des elektrochemischen Meßfühlers ist nachteilig, daß im Meßgas enthaltene, flüssige Anteile, beispielsweise Benzintropfen im Abgas einer Brennkraftmaschine, und feste Anteile, beispielsweise Rußpartikel, durch die Gaszutrittsöffnung des elektrochemischen Messfühlers in die innere Aushöhlung gelangen können und die Funktion des elektrochemischen Messfühlers über einen längeren Zeitraum stören. Der durch den elektrochemischen Messfühler bestimmte Messwert kann durch ein mit Benzin angereichertes Abgas ("fettes" Abgas) verfälscht werden. Bei Verstopfen des Gaszutrittsloches kann die Funktion des elektrochemischen Messfühlers sogar zerstört werden.

Aus der US 5,507,937 ist ein elektrochemischer Messfühler zum Bestimmen einer Gaskonzentration eines Messgases bekannt. Der Messfühler enthält ein elektrochemisches Element, das eine elektrochemische Pumpzelle mit einer ersten und einer zweiten Elektrode umfasst und das einen Gasraum enthält, der durch eine Gaszutrittsöffnung mit dem Messgas verbunden ist und in dem eine der beiden Elektroden angeordnet ist.

Aus der US 5,419,828 ist weiterhin ein elektrochemischer Messfühler mit einer Messzelle bekannt, wobei das Sensorelement von einer porösen Abdeckung überdeckt wird.

### Vorteile der Erfindung

Die Erfindung betrifft ein Verfahren zur Herstellung eines elektrochemischen Messfühlers zum Bestimmen einer Gaskonzentration, z.B. einer Sauerstoffkonzentration, eines Messgases. Der Messfühler weist ein elektrochemisches Element auf, das eine elektrochemische Pumpzelle mit einer ersten und einer zweiten Elektrode und mit einem Gasraum umfasst, wobei der Gasraum über eine Gaszutrittsöffnung mit dem Messgas verbunden ist, und wobei in dem Gasraum eine der beiden Elektroden angeordnet ist. Die Gaszutrittsöffnung ist mit einer porösen Abdeckung überdeckt.

Die Erfindung bietet den Vorteil, dass ein Eindringen von flüssigen und festen Anteilen, die im Messgas enthalten sind, in das Innere des Messfühlers, d.h., die als Gasraum bezeichnete innere Aushöhlung, verhindert wird. Das geschieht dadurch, dass eine poröse Schicht als Abdeckung der Gaszutrittsöffnung auf der dem Messgasraum zugewandten Fläche des elektrochemischen Elements angebracht wird.

Diese Abdeckung ist für das Messgas durchlässig, stellt jedoch für im Messgas enthaltene flüssige und feste Anteile eine Barriere dar. Die in dieser Abdeckung zurückgehaltene, eingelagerte Flüssigkeit, beispielsweise Benzin, verdampft nach Einschalten einer vorteilhafterweise vorzusehenden Heizung schnell, so dass nur Benzindampf aus dem Inneren des elektrochemischen Messfühlers durch das durch die elektrochemische Pumpzelle ständig gepumpte Gas, z.B. Sauerstoff, verdrängt werden muss.

Die Erfindung stellt ein Verfahren zur Herstellung eines derartigen elektrochemischen Messfühlers bereit, bei dem zunächst die Gaszutrittsöffnung eingebracht wird und anschließend mittels einer Abdeckschicht verschlossen wird. Auf diese zusätzliche Abdeckschicht wird schließlich die poröse Abdeckung aufgebracht. Damit wird in vorteilhafter Weise sichergestellt, dass durch das Aufbringen einer porösen Abdeckung die Porositätseigenschaften und damit die Funktionsfähigkeit des elektrochemischen Messfühlers nicht beeinträchtigt werden.

Die Abdeckschicht kann selbst porös, d.h., für das Messgas durchlässig sein. In vorteilhafter Weise werden für die Abdeckschicht aber durch Hitzebehandlung rückstandsfrei verbrennende Materialien oder porenbildende Materialien verwendet. Im zweiten Fall verbleibt nach der Fertigstellung des erfindungsgemäßen elektrochemischen Messfühlers, vorzugsweise nach einer Sinterung, eine zusätzliche poröse Schutzmembrane. Geeignet sind z.B. Wachs, Ruß, Graphit oder Methylxanthine wie Theobromin, Theophyllin oder Coffein. Die Abdeckschicht wird mittels einer Transfertechnologie aufgebracht, während die poröse Abdeckung vorzugsweise mittels Siebdruck aufgebracht wird.

Eine weitere vorteilhafte Ausgestaltung der Erfindung sieht vor, daß ein Hohlraum, in einem vorteilhafterweise teilweise mit einer porösen Füllung versehenen Gaszutrittskanal, das heißt zwischen der über der Gaszutrittsöffnung angebrachten Abdeckung und einer vorteilhafterweise in der inneren Aushöhlung befindlichen porösen Füllung, vorhanden ist. Der Hohlraum verhindert eine kapillare Weiterleitung des flüssigen Benzins aus der erfindungsgemäßen Abdeckung zur inneren porösen Füllung. Dieser Hohlraum, der demgemäß eine Trennung zwischen der porösen Abdeckung und der in der inneren Aushöhlung befindlichen porösen Füllung darstellt, kann vorzugsweise dadurch gebildet werden, daß während des Sinterns sublimierbares Material ausgebrannt wird. Die Abdeckung über der Gaszutrittsöffnung wird vorzugsweise aus einem porösen Material gebildet, das die Fortsetzung einer die gesamte dem Meßgasraum zugewandte Fläche des elektrochemischen Elementes überdeckenden porösen Schutzschicht sein kann.

Durch das erfindungsgemäße Verfahren können Zweizellensensoren (Breitbandsensoren) aus einer einen ersten Festelektrolytkörper umfassenden Pumpzelle und einer einen zweiten Festelektrolytkörper umfassenden Konzentrationszelle hergestellt werden.

Weitere vorteilhafte Ausgestaltungen der Erfindung ergeben sich aus den Unteransprüchen.

### Zeichnung

Die Erfindung wird nachfolgend anhand eines Ausführungsbeispiels und der dazugehörigen Zeichnung näher erläutert. Es zeigen
- Figur 1: eine schematische Schnittdarstellung eines erfindungsgemäßen elektrochemischen Meßfühlers;
- Figur 2: eine Figur 1 entsprechende schematische Schnittdarstellung eines Vorkörpers während der Herstellung.

### Beschreibung des Ausführungsbeispiels

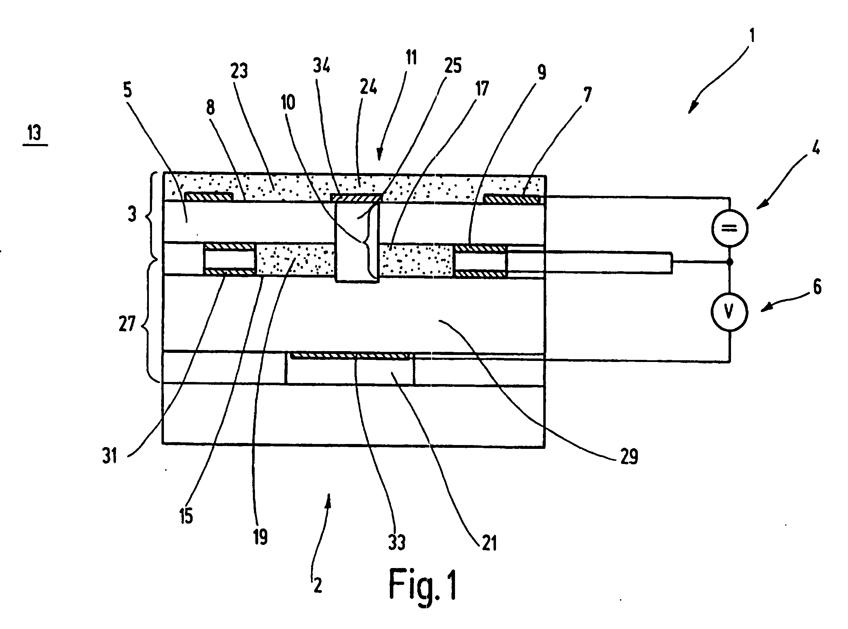

Die Figur 1 zeigt in einem Querschnitt einen elektrochemischen Meßfühler 1, umfassend ein elektrochemisches Element 2, eine Spannungsversorgungseinrichtung 4 sowie ein Spannungsmeßgerät 6. Das elektrochemische Element 2 weist eine elektrochemische Pumpzelle 3 auf, die aus einem ersten planaren Festelektrolytkörper 5, einer ersten porösen Elektrode 7 und einer zweiten porösen Elektrode 9 aufgebaut ist. Das elektrochemische Element 2 weist weiterhin eine elektrochemische Sensorzelle auf, im folgenden Nernstzelle 27 genannt, die aus dem zweiten Festelektrolytkörper 29 sowie einer dritten Elektrode 31 und einer vierten Elektrode 33 aufgebaut ist. Die elektrochemische Pumpzelle 3 wird an der ersten und zweiten Elektrode 7, 9 mittels der externen Spannungsversorgungseinrichtung 4 mit Spannung versorgt. Der erste und zweite Festelektrolytkörper 5, 29 sind miteinander verbunden und umschließen eine auch als Gasraum 17 bezeichnete innere Aushöhlung 15. Die innere Aushöhlung 15 ist mit einem porösen Material 19 ganz gefüllt und enthält die zweite und dritte Elektrode 9, 31. Die innere Aushöhlung 15 steht über einen Gaszutrittskanal 10 und eine Gaszutrittsöffnung 11 mit dem Meßgas 13 in Verbindung. Über der Gaszutrittsöffnung 11 ist eine poröse Abdeckung 24 angebracht, die Teil einer porösen Schutzschicht 23 ist, die eine dem Meßgas 13 zugewandte Fläche 8 des ersten Festelektrolytkörpers 5 und somit auch die erste Elektrode 7 der elektrochemischen Pumpzelle 3 bedeckt. Zwischen der porösen Abdeckung 24 und der Gaszutrittsöffnung 11 befindet sich eine zusätzliche poröse Schutzmembrane 34. Der zweite Festelektrolytkörper 29 weist einen Referenzgasraum 21 auf. Im Referenzgasraum 21 ist die vierte Elektrode 33 angebracht, die einem Vergleichsgas ausgesetzt ist.

Das Meßgas 13 gelangt über die Gaszutrittsöffnung 11 und den Gaszutrittskanal 10 in die innere Aushöhlung 15, wobei mittels einer an die erste und zweite Elektrode 7, 9 der Pumpzelle 3 angelegte Pumpspannung durch Zupumpen oder Abpumpen von Sauerstoff ein kontrollierter Partialdruck eingestellt wird. Die Spannungsversorgung der elektrochemischen Pumpzelle 3 übernimmt eine außerhalb des elektrochemischen Elements 2 angebrachte Spannungsversorgungseinrichtung 4.

Aufgrund der unterschiedlichen Gaspartialdrücke in dem Gasraum 17 sowie einem im zweiten Festelektrolytkörper 29 angeordneten Referenzgasraum 21 stellt sich ein elektrochemischer Potentialunterschied zwischen der dritten und vierten Elektrode 31, 33 des zweiten Festelektrolytkörpers 29 ein, der durch ein außerhalb des elektrochemischen Elements liegendes Spannungsmeßgerät 6 erfaßt wird.

Die erfindungsgemäße Abdeckung 24 und der darunter befindliche Hohlraum 25 verhindern ein Eindringen von im Meßgas enthaltenen flüssigen und festen Anteilen, beispielsweise Benzin oder Rußpartikel, über die Gaszutrittsöffnung 11 und den Gaszutrittskanal 10 in den Gasraum 17. Die Abdeckung 24 ist als Teil einer porösen Schutzschicht 23 ausgeführt, die zumindest teilweise auf der dem Meßgas 13 zugewandten Fläche 8 des ersten Festelektrolytkörpers 5 angebracht ist. Diese poröse Schutzschicht 23 ist für das Meßgas 13 durchlässig, stellt jedoch für im Meßgas 13 enthaltene flüssige und feste Anteile eine Barriere dar. Der unter der Abdeckung 24 befindliche Hohlraum 25 verhindert eine kapillare Weiterleitung des Benzins über den Gaszutrittskanal 10 zur inneren Aushöhlung 15 bzw. dem Gasraum 17. Das in der Abdeckung 24 zurückgehaltene, eingelagerte Benzin verdampft nach Einschalten einer vorteilhafterweise vorzusehenden, hier nicht dargestellten, Heizung schnell, so daß nur Benzindampf aus der inneren Aushöhlung 15 des elektrochemischen Meßfühlers 1 durch das durch die elektrochemische Pumpzelle 3 ständig gepumpte Gas, zum Beispiel Sauerstoff, verdrängt werden muß.

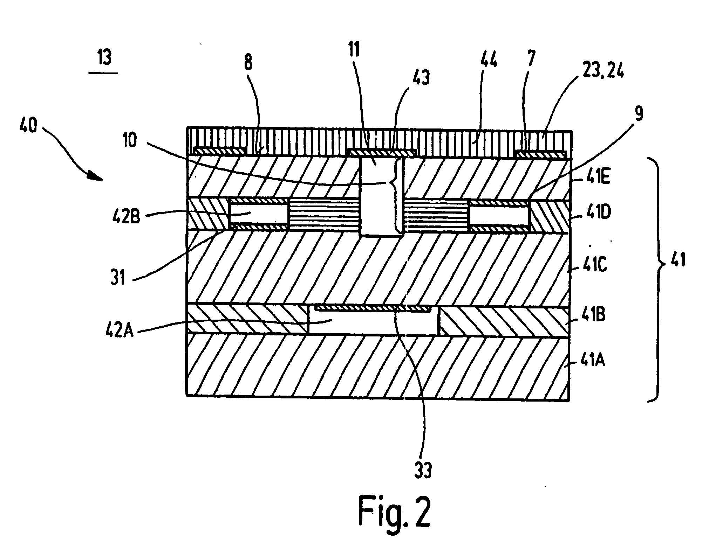

Im folgenden wird die Herstellung des elektrochemische Meßfühler 1 anhand Figur 2 beschrieben. Der zweite Festelektrolytkörper 29 und der erste Festelektrolytkörper 3 bestehen aus keramischen Materialien, die durch Sinterung eines entsprechenden präkeramischen Grünkörpers 41 hergestellt werden.

Der präkeramische Grünkörper wird durch Stapeln von einzelnen flächigen präkeramischen Grünkörpern 41A bis 41E hergestellt. Beim Sintern werden diese Grünkörper 41A bis 41E zu einem einstückigen Keramikkörper umgesetzt. Die Grünkörper 41B, 41D, 41E weisen Aussparungen 42A, 42B auf, die nach dem Sintern den Gasraum 17 bzw. den Referenzgasraum 21 darstellen. Die Elektroden werden durch Beschichtung der Oberflächen der einzelnen Grünkörper 41C bis 41E aufgebracht, bspw. aufgedruckt. Dieses Verfahren ist allgemein bekannt.

Nach dem Stapeln der Grünkörper 41A bis 41E und vor dem Sintern wird der Gaszutrittskanal 10 eingebracht, z. B. gebohrt. Er kann auch durch andere geeignete Techniken, z. B. Stanzen der Grünkörper oder Laserbehandlung, eingebracht werden. Anschließend wird auf der dem Meßgas zugewandten Oberfläche 8 die Schutzschicht 23 aufgebracht, die gleichzeitig als Abdeckung 24 für die Gaszutrittsöffnung 11 des Gaszutrittskanals 10 dient. Die Schutzschicht wird in Form einer sinterfähigen Paste 44 im Siebdruckverfahren aufgebracht. Diese Paste 44 wird beim anschließenden Sintern zu der porösen Schutzschicht 23 umgesetzt.

Dabei ist darauf zu achten, daß die Paste 44 nicht in den Gaszutrittskanal 10 eindringt, weil dies die Porositätseigenschaften des Meßfühlers 2 verändern und seine Funktionsfähigkeit beeinträchtigen würde. Daher wird vor dem Aufdrucken der Paste eine Abdeckschicht in Form einer dünnen Folie 43 mittels einer Transfertechnologie aufgebracht. Das heißt, die Folie 43 befindet sich auf einem Träger. Der Träger wird auf die Oberfläche 8 aufgelegt. Die Folie 43 wird durch Krafteinwirkung vom Träger auf die Oberfläche 8 übertragen.

Die Folie 43 verschließt die Gaszutrittsöffnung 11, so daß die Paste 44 problemlos aufgedruckt werden kann, ohne daß sie in den Gaszutrittskanal 10 gelangt. Beim Sintern verbrennt die Folie 43 rückstandsfrei unter Bildung eines Hohlraumes, oder sie bildet eine zusätzliche dünne poröse Schutzmembrane 34, durch die das Meßgas 13 ungehindert in den Gaszutrittskanal 10 diffundieren kann. Dies ist in Figur 1 dargestellt.

## Patentansprüche

1. Verfahren zum Herstellen eines elektrochemischen Messfühlers (1) mit einer zwei Elektroden enthaltenden elektrochemischen Pumpzelle (3), die einen Gasraum (17) aufweist, welcher über eine Gaszutrittsöffnung (11) mit einem Messgas (13) verbunden ist, wobei zur Verbindung des Gasraumes (17) der elektrochemischen Pumpzelle (3) mit dem Messgas (13) eine Gaszutrittsöffnung (11) eingebracht wird, **dadurch gekennzeichnet, dass** die Gaszutrittsöffnung (11) mit einer Abdeckschicht (43) verschlossen wird und anschließend eine poröse Abdeckung (24) auf diese Abdeckschicht (43) aufgebracht wird, wobei für die Abdeckschicht (43) ein rückstandsfrei verbrennendes Material oder ein durch Hitzebehandlung porenbildendes Material verwendet wird, und wobei die Abdeckschicht (43) in Form einer Folie mittels Transfertechnologie aufgebracht wird und die Abdeckschicht (43) nach dem Aufbringen der porösen Abdeckung (24) einer Hitzebehandlung, vorzugsweise einer Sinterung, unterzogen wird.

2. Verfahren nach Anspruch 1, **dadurch gekennzeichnet, dass** für die Abdeckschicht (34, 43) Ruß, Graphit, Wachs oder Methylxanthine, vorzugsweise Theobromin, Theophyllin oder Coffein, verwendet werden.

3. Verfahren nach einem der vorhergehenden Ansprüche, **dadurch gekennzeichnet, dass** die poröse Abdeckung (24) in Form einer Paste (44) mittels Siebdruck aufgebracht wird.

4. Verfahren nach einem der vorhergehenden Ansprüche, **dadurch gekennzeichnet, dass** ein Gaszutrittskanal (10) eingebracht wird, der zumindest teilweise als Hohlraum (25) ausgebindet wird.

5. Verfahren nach einem der vorhergehenden Ansprüche, **dadurch gekennzeichnet, dass** die poröse Abdeckung (24) als Teil einer die dem Messgas (13) zugewandten Fläche (8) des elektrochemischen Elements überdeckenden porösen Schutzschicht (23) aufgebracht wird.

## Claims

1. Method for producing an electrochemical sensor (1) with an electrochemical pumping cell (3) which comprises two electrodes and has a gas chamber (17), which is connected to a test gas (13) via a gas entry opening (11), a gas entry opening (11) being introduced for the connection of the gas chamber (17) of the electrochemical pumping cell (3) to the test gas (13), **characterized in that** the gas entry opening (11) is closed by a covering layer (43) and subsequently a porous covering (24) is applied to this covering layer (43), a material that burns without leaving a residue or a material that forms pores under heat treatment being used for the covering layer (43), and the covering layer (43) being applied in the form of a film by means of transfer technology and the covering layer (43) being subjected to a heat treatment, preferably sintering, after the application of the porous covering (24).

2. Method according to Claim 1, **characterized in that** carbon black, graphite, wax or methyl xanthine, preferably theobromine, theophylline or caffeine, are used for the covering layer (43).

3. Method according to one of the preceding claims, **characterized in that** the porous covering (34) is applied in the form of a paste (44) by means of screen printing.

4. Method according to one of the preceding claims, **characterized in that** a gas entry channel (10), which is formed at least partially as a hollow space (25), is introduced.

5. Method according to one of the preceding claims, **characterized in that** the porous covering (24) is applied as part of a porous protective layer (23) covering the surface (8) of the electrochemical element that is facing the test gas (13).

## Revendications

1. Procédé de fabrication d'un capteur électrochimique (1), comprenant une cellule de pompage électrochimique (3) contenant deux électrodes, qui présente une chambre de gaz (17) reliée à un gaz de mesure (13) par une ouverture d'entrée de gaz (11), cette ouverture d'entrée de gaz (11) étant intégrée pour relier la chambre de gaz (17) de la cellule de pompage électrochimique (3) avec le gaz de mesure (13),
**caractérisé en ce qu'**
on ferme l'ouverture d'entrée de gaz (11) par une couche de recouvrement (43), puis on applique un recouvrement poreux (24) sur cette couche de recouvrement (43), en utilisant pour la couche de recouvrement (43) un matériau combustible sans résidus ou un matériau formant des pores par traitement thermique, la couche de recouvrement (43) étant appliquée sous la forme d'une feuille au moyen d'une technologie de transfert, et après l'application du recouvrement poreux (24), on soumet la couche de recouvrement (43), à un traitement thermique, de préférence à un frittage.

2. Procédé selon la revendication 1,
**caractérisé en ce que**
pour la couche de recouvrement (34, 43), on utilise de la suie, du graphite, de la cire ou de la méthylxanthine, de préférence de la théobromine, de la théophylline ou de la caféine.

3. Procédé selon l'une des revendications précédentes,
**caractérisé en ce que**
le recouvrement poreux (24) est appliqué sous la forme d'une pâte (44) par sérigraphie.

4. Procédé selon l'une des revendications précédentes,
**caractérisé en ce qu'**
un canal d'entrée de gaz (10) est intégré, configuré au moins partiellement sous forme d'espace creux (25).

5. Procédé selon l'une des revendications précédentes,
**caractérisé en ce que**
le recouvrement poreux (24) est appliqué sous la forme d'une couche de protection poreuse (23) recouvrant une partie d'une surface (8) de l'élément électrochimique tournée vers le gaz de mesure (13)
